# EUROPEAN PATENT SPECIFICATION

(11) **EP 2 779 725 B1**
(45) Date of publication and mention of the grant of the patent: **27.06.2018**
(21) Application number: 12854958.1
(22) Date of filing: 22.05.2012
(51) Int. Cl.: H04W 16/04, H04W 52/02

(54) **CARRIER CONTROL METHOD AND CORRESPONDING BASE STATION DEVICE**
TRÄGERSTEUERUNGSVERFAHREN UND ENTSPRECHENDE BASISSTATIONSVORRICHTUNG
PROCÉDÉ DE COMMANDE DE PORTEUSE ET DISPOSITIF DE STATION DE BASE CORRESPONDANT

(30) Priority: 09.12.2011 CN 201110409118
(43) Date of publication of application: 17.09.2014
(73) Proprietor: Huawei Technologies Co., Ltd., Longgang District Shenzhen, Guangdong 518129 (CN)
(72) Inventor: LIU, Yalin, Shenzhen Guangdong 518129 (CN); ZHANG, Wei, Shenzhen Guangdong 518129 (CN); ZHANG, Shunqing, Shenzhen Guangdong 518129 (CN); WU, Ye, Shenzhen Guangdong 518129 (CN)
(74) Representative: Epping - Hermann - Fischer
(86) International application number: PCT/CN2012/075883
(87) International publication number: WO 2013/082921

(56) References cited:
- WO-A1-2010/145336
- WO-A1-2011/085398
- CN-A- 101 232 659
- CN-A- 101 568 122
- US-A- 5 034 993
- US-B1- 6 584 330
- HU JINLING: "TD-SCDMA/TD-LTE evolution - Go Green", COMMUNICATION SYSTEMS (ICCS), 2010 IEEE INTERNATIONAL CONFERENCE ON, IEEE, PISCATAWAY, NJ, USA, 17 November 2010 (2010-11-17), pages 301-305, XP031848343, ISBN: 978-1-4244-7004-4
- CHINA MOBILE RESEARCH INSTITUTE: "C-RAN, The Road Towards Green RAN", INTERNET CITATION, October 2011 (2011-10), pages 1-48, XP002700746, Retrieved from the Internet: URL:http://labs.chinamobile.com/cran/wp-co ntent/uploads/CRAN_white_paper_v2_5_EN(1). pdf [retrieved on 2013-07-10]

## Description

### TECHNICAL FIELD

The present invention relates to a field of a mobile communication, and particularly, relates to a carrier control method and corresponding base station device.

### BACKGROUND

In a mobile communication system, a base station occupies most part of energy consumption of communication devices. Reduction of power consumption of the base station plays an important role in energy saving and emission reduction for an operator.

A baseband board is a physical media for carrying a carrier. Generally, a plurality of baseband boards are arranged in one base station, and one or more carriers are carried on each baseband board. A carrier on a baseband board would continuously work and consume energy after being enabled, even if there is no traffic.

In order to reduce energy consumption, a method for solving the problem of high energy consumption in the prior art is as follows.

when a base station detects that a radio network controller disables a carrier whose load is zero, the base station checks whether there exists an activated carrier on a baseband unit where the disabled carrier is located. If there exists no activated carrier, the baseband unit is powered off. And furthermore, through adjusting the number of users of a carrier on a baseband unit, disabling an adjusted carrier whose number of users is zero, and powering off an adjusted baseband unit where no activated carrier exists, the utilization rate of resources is improved, and the energy is saved.

In the prior art, the utilization rate is improved and the consumption of resource is reduced by an angle of disabling a baseband unit. However, the effect of reducing the energy consumption is not very significant. Thus, there need to seek a method for reducing the energy consumption more significantly.

In addition, document WO 2011/085398 A1 mainly discloses a method for reducing energy consumption of a base station. Specifically, the document discloses that an energy management module may include a carrier load threshold. The carrier load threshold may be a preset threshold that defines the minimum carrier load when the Node B shuts off one or more carriers or one or more subunits of the baseband unit (BBU) to reduce the power consumption of the Node B.

Document CN 101568122 A generally discusses a method for realizing base station electricity saving in a TDS-CDMA system, which comprises the following steps: a, the system is initialized, required corresponding baseband resources are configured according to frequency point number of planned cells under a base station in the system; and b, the system dynamically dispatches power up and power down of a baseband board according to real-time telephone traffic statistic situation.

Document US 6584330 B1 discloses adaptive power management for a node of a cellular telecommunications network. Specifically, the document discloses that according to an exemplary embodiment, the traffic load of a node (e.g., base station node) is measured. The measured load of the node, optionally in combination with other parameters such as statistical analysis and/or thresholds, is utilized in determining whether or not the node enters a power saving mode. For example, when the node's traffic load is below a particular threshold for a given period of time, the node may enter a power saving mode by turning off certain components or functions of the node and/or instructing certain components or functions of the node to enter a sleep mode. Exemplary actions which can be taken in order to save power during the power saving mode include, for example and without limitation: 1) switching off or putting to sleep one or more MCPAs, 2) turning off one or more carriers, 3) turning off or putting to sleep one or more circuit boards or parts of boards, and/or 4) reducing fan speed based upon traffic load of the node. Any one or more of these or similar actions may be taken in order to enable the node to save power when its traffic load is at a low level.

### SUMMARY

The invention is defined by independent claims 1 and 7. In the following, parts of the description and drawings referring to embodiments which are not covered by the claims are not presented as embodiments of the invention, but as examples useful for understanding the invention.

A technical problem mainly solved in the present invention is to provide a carrier control method, and the present invention further provides a corresponding base station device, which can control a carrier in a sector through a change situation of traffic of a current period, so that resources are saved and a rate of utilization is improved.

An embodiment of the present invention discloses a carrier control method, including:
acquiring traffic information of a current period on all baseband boards in a base station itself, the traffic information comprising traffic of each sector, wherein a baseband board is a physical media for carrying a carrier, and one or more carriers configured on each baseband board cover one or more sectors;
configuring, according to the traffic information of the current period, a disabling sequence of all the baseband boards;
determining, according to stored traffic information of each sector before the current period and the traffic information of the current period, a change situation of the traffic of each sector; and,
controlling, according to the change situation of the each sector and the disabling sequence of all the baseband boards, the carriers in the each sector respectively.

An embodiment of the present invention further discloses a base station device, including:
an acquiring module, configured to acquire traffic information of a current period on all baseband boards in the base station device, the traffic information comprising traffic of each sector, wherein a baseband board is a physical media for carrying a carrier, and one or more carriers configured on each baseband board cover one or more sectors;
a configuring module, configured to configure, according to the traffic information of the current period, a disabling sequence of all the baseband boards;
a determining module, configured to determine, according to traffic information of the each sector before the current period, which is stored locally, and the traffic information of the current period, a change situation of the traffic of each sector; and,
a control module, configured to control, according to the change situation of the each sector and the disabling sequence of all the baseband boards, the carriers in the each sector respectively.

Different from the case in the prior art, through acquiring traffic information of a current period on one or more baseband boards in a base station itself, then configuring a disabling sequence of the baseband boards according to the traffic information of the current period, and determining a change situation of the traffic of each sector according to stored traffic information before the current period and the acquired traffic information of the current period, the present invention can control, according to the change situation of the traffic and the disabling sequence of the baseband boards, a carrier in each sector in real time, so that more devices is controlled, by following the principle of reducing energy consumption state, in a disabling state under the condition that traffic does not increase, which can reduce the energy consumption and save resources better.

### BRIEF DESCRIPTION OF DRAWINGS

Fig. 1 is a data flow diagram of a first embodiment of a carrier control method in the present invention;
Fig. 2 is a data flow diagram of a second embodiment of the carrier control method in the present invention;
Fig. 3 is a data flow diagram of a method for integrating a carrier in a sector in the second embodiment of the present invention;
Fig. 4A is a schematic diagram of a mapping relation between baseband boards and carriers before adjustment, described in an application example of the present invention;
Fig. 4B is a schematic diagram of a mapping relation between baseband boards and carriers after adjustment, described in an application example of the present invention;
Fig. 5 is a schematic diagram of another mapping relation between baseband boards and carriers before adjustment, described in an application example of the present invention;
Fig. 6 is a schematic diagram of another mapping relation between baseband boards and carriers before adjustment described in an application example of the present invention;
Fig. 7 is a schematic diagram of a logical structure of a base station device in a first embodiment in the present invention;
Fig. 8 is a schematic diagram of a logical structure of a base station device in a second embodiment in the present invention; and,
Fig. 9 is a schematic diagram of a logical structure of a configuring module in the second embodiment of the base station device of the present invention.

### DESCRIPTION OF EMBODIMENTS

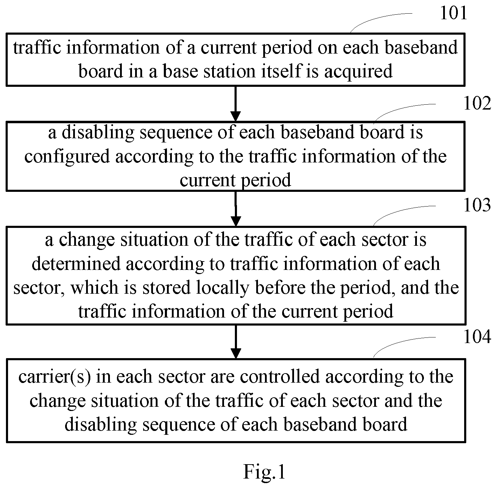

With reference to Fig. 1, a first embodiment of a carrier control method in the present invention includes followings.

101, traffic information of a current period on each baseband board in a base station itself is acquired.

The base station acquires the traffic information of the current period of carriers carried on each baseband board in the base station, namely the traffic information of the current period. Parameters included in the traffic information are: traffic of each carrier, the number of users of each carrier carried on each baseband board, traffic of each carrier carried on each baseband board, the number of disabled carriers on each baseband board, the number of enabled carriers on each baseband board, energy consumption of each baseband board and the like. The carriers configured on each baseband board cover one or more sectors.

Furthermore, for parameters related to the baseband board, the parameters of a part of baseband boards in the base station may be acquired, and the parameters of each baseband board in the base station may also be acquired, which is not limited herein.

102, a disabling sequence of all baseband boards is configured according to the traffic information of the current period.

After the traffic information of the period is acquired, the disabling sequence of all baseband boards in the base station is configured according to the traffic information. Furthermore, a level of enabling state of each baseband board in the base station is also configured according to the traffic information.

The disabling sequence of baseband boards is a sequence that the baseband boards are disabled under the condition that the traffic is reduced.

The level of enabling state of a baseband board means the enabling degree of the baseband board. When all carriers on the baseband board are enabled with full-loads, the enabling state of the baseband board is the highest. When the baseband board is in a disabled state, the enabling state of the baseband board is the lowest.

103, a change situation of the traffic of each sector is determined according to traffic information of each sector, which is stored locally before the period, and the traffic information of the current period.

Traffic information, which is acquired when a period of control of each carrier starts, is stored locally before the period ends in order to use in the next period.

Specifically, firstly, the traffic information stored locally before the period is acquired. Then the traffic information before the period is compared with the traffic information acquired in the period. The change situation of the traffic of each sector in the period compared with the traffic before the period is determined, namely to determine whether the traffic increases.

104, carrier(s) in each sector are controlled according to the change situation of the traffic of each sector and the disabling sequence of all baseband boards.

The carrier(s) in each sector are controlled according to the change situation of the traffic of each sector and the disabling sequence of all baseband boards. Or the carrier(s) in each sector are controlled according to the change situation of the traffic of each sector and the level of enabling state of each baseband board.

Specifically, if traffic is unchanged or reduced, carrier(s) in each sector are controlled according to the change situation of the traffic of each sector and the disabling sequence of all baseband boards. Other than a covering carrier, carriers, whose load are zeros, are disabled as possible, wherein the covering carrier is a carrier which is configured as being incapable of disablement to ensure the coverage of each sector.

Furthermore, if the traffic increases, the carrier(s) in each sector is controlled according to the change situation of the traffic of each sector and the level of enabling state of each baseband board. A user or a service is as possible accessed or switched to a carrier with a high enabling state level, so that no disabled carrier will be enabled, or less disabled carriers will be enabled as possible.

In this embodiment, the method provided in the present invention, in a similar situation, reduces the number of enabled carriers, reduces energy consumption of a base station unit and saves resources through analyzing traffic information of a current period, configuring a disabling sequence and an enabling state level of baseband boards, then determining change situation of traffic of each sector according to traffic information stored locally before the current period and traffic information of the current period, and controlling a carrier in a sector according to the change situation of the traffic, the disabling sequence and the enabling state level of the baseband boards, namely that if the traffic is unchanged or reduced, carrier(s) in each sector is controlled according to the change situation of the traffic and the disabling sequence of the baseband boards, and other that a covering carrier, carriers, whose loads are zeros, are disabled as possible; and if the traffic increases, carrier(s) in each sector is controlled according to the change situation of the traffic and the level of enabling state of the baseband board, and a user or a service is as possible accessed or switched to a carrier with a high enabling state level, so that no disabled carrier will be enabled or, less disabled carriers will be enabled as possible.

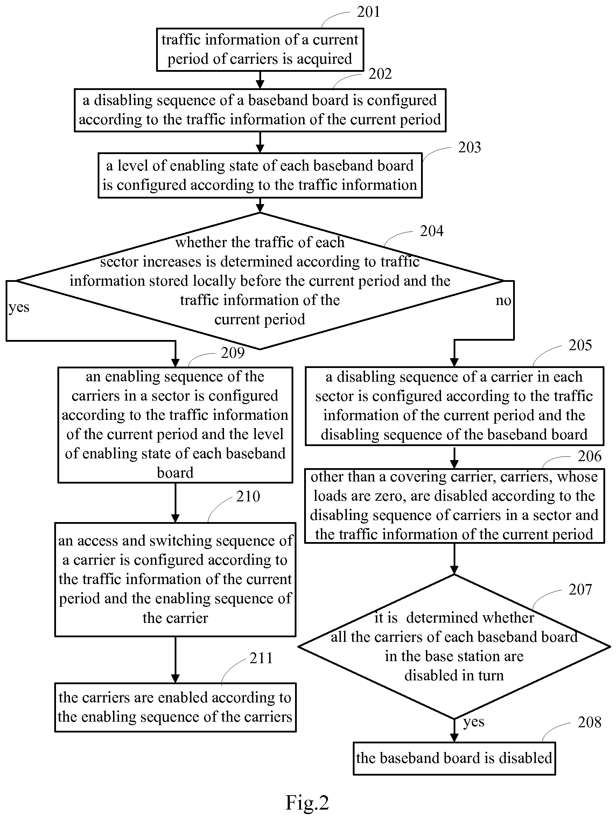

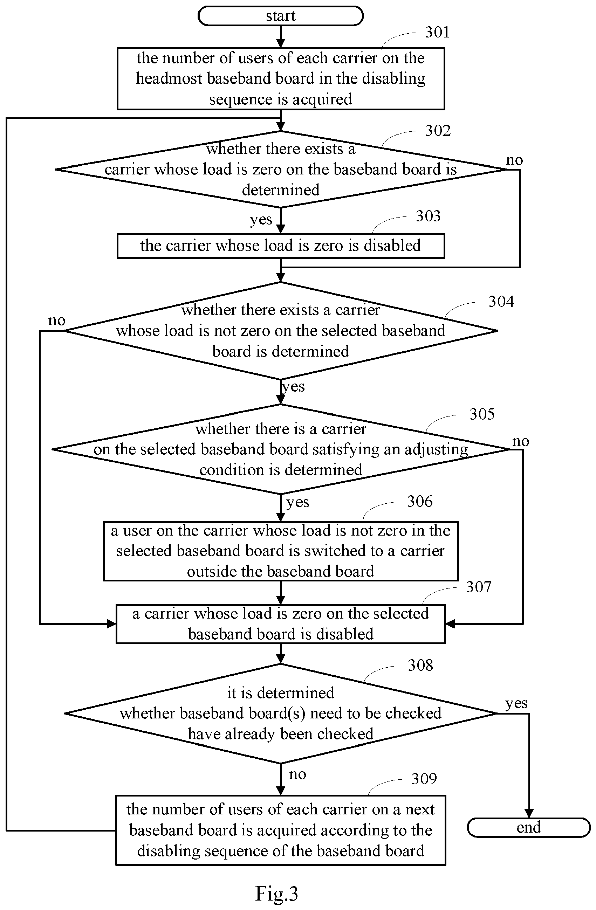

With reference to Fig. 2 and Fig. 3, a second embodiment of a carrier control method in the present invention includes followings.

201, traffic information of a current period of carriers is acquired.

A base station acquires the traffic information of the current period of carriers carried on each baseband board in the base station, namely the traffic information of the current period. The traffic information includes the following parameters: traffic of each carrier, the number of users of each carrier carried on each baseband board, traffic of each carrier carried on each baseband board, the number of disabled carriers on each baseband board, the number of enabled carriers on each baseband board, energy consumption of each baseband board and the like.

Furthermore, for parameters related to the baseband boards, the parameters of part of baseband boards in the base station may be acquired, and the parameters of each baseband board in the base station may also be acquired, which is not limited herein.

202, a disabling sequence of baseband boards is configured according to the traffic information of the current period.

After the traffic information of the current period of the carrier(s) in each sector in the current base station is acquired, the disabling sequence of all baseband boards is configured according to the traffic information. For example, the disablement of each base band board may be sorted by setting one queue. Or the disablement of each baseband board may be sorted by pasting a priority label to a baseband board, which is not limited herein.

The disabling sequence of all baseband boards is configured according to one or more parameters of the traffic information of the current period, which is specifically described hereafter by pasting a priority label to each baseband board.

The sorting by size is performed according to the number of users of each carrier carried on each baseband board or the traffic of each carrier carried on each baseband board. Then the disabling sequence of all baseband boards is configured according to the sorting by size.

The larger the number of users of each carrier carried on each baseband board is or the larger the traffic of each carrier carried on each baseband board is, the lower the disabling priority of a baseband board is. The smaller the number of users of each carrier carried on each baseband board is or the smaller the traffic of each carrier carried on each baseband board is, the higher the disabling priority of a baseband board is.

Or, according to the number of users of each carrier carried on each baseband board and the number of disabled carriers on each baseband board where each carrier is located, result(s) of calculation are acquired by using a preset calculating method. The result(s) of the calculating are sorted by size, and then the disabling sequence of all baseband boards is configured according to the sorting by size.

For example, the disabling priority of a baseband board is determined according to the sum of the number of users of each carrier carried on each baseband board and the number of carriers enabled on each baseband board. Supposed that the number of users on each baseband board is M, the number of enabled carriers is N, and Y = M+10N, the disabling priority of each baseband board is configured according to the value of Y. The larger the value of Y is, the lower the disabling priority is. The smaller the value of Y is, the higher the disabling priority is. The calculating method may be preset according to a specific condition and an expectation to be arrived, which is not limited herein.

For another example, the disabling sequence of all baseband boards is configured according to the number of disabled carriers on each baseband board. The larger the number of disabled carriers on each baseband board is, the closer to the top the disabling sequence of the baseband boards is.

Here is merely a specific illustration about configuring a disabling sequence of baseband boards, and the configuring method of the disabling sequence of the baseband boards is not limited to the several ones mentioned above. For example, the disabling sequence of the baseband boards may also be configured according to the number of users of each carrier on each baseband board and an energy consumption of each baseband board, which is not limited herein.

203, a level of enabling state of each baseband board is configured according to the traffic information.

The level of enabling state of each baseband board indicates the enabling degree of a baseband board. When all carriers on a baseband board are enabled with full-loads, the enabling state of the baseband board is the highest, and when the baseband board is in a disabled state, the enabling state of the baseband board is the lowest.

The level of enabling state of each baseband board is configured according to one or more parameters in the traffic information of the current period.

Specifically, the level of enabling state of each baseband board is configured according to the number of users of each carrier carried on each baseband board or the traffic of each carrier carried on each baseband board.

The sorting by size is performed according to the number of users of each carrier carried on each baseband board or the traffic of each carrier carried on each baseband board, and then the level of enabling state of each baseband board is configured according to the sorting by size.

The larger the number of users of each carrier carried on the baseband board is, the higher the level of enabling state is. The smaller the number of users carried on the baseband board is, the lower the level of enabling state is. The level of enabling state of the disabled baseband board is the lowest.

The larger the traffic of each carrier carried on each baseband board is, the higher the level of enabling state is. The smaller the traffic of each carrier carried on each baseband board is, the lower the level of enabling state is.

Or, the level of enabling state of each baseband board is configured according to the energy consumption of each baseband board. Carrying capacity and level of enabling state of a baseband board with higher energy consumption are larger. Carrying capacity and level of enabling state of a baseband board with lower energy consumption are smaller.

Here is merely a specific illustration for a level of enabling state of a baseband board, and the method of configuring the level of enabling state of a baseband is not limited to the above-mentioned several ones. For example, the level of enabling a baseband board may be configured according to the number of enabled carriers on each baseband board and energy consumption of each baseband board, which is not limited herein.

After the level of enabling state of each baseband board is configured, the disabling sequence of baseband boards with higher level of enabling state is in the behind, and similarly, the disabling sequence of a carrier carried on the baseband board is in the behind. And, when carriers are integrated or traffic increases, users are preferentially switched or accessed to a baseband board with high level of enabling state.

204, whether the traffic of each sector increases is determined according to traffic information before the current period, which is stored locally, and the traffic information of the current period.

When each period of carrier control starts, acquired traffic information is stored locally before this period ends for use in next period.

Specifically, the traffic information stored locally before the period is acquired firstly. Then the traffic information before the period is compared with the traffic information acquired in the period to determine whether the traffic of each sector in the period increases compared with the traffic before the period. If the traffic of a certain sector in the current period increases compared with the traffic before the current period, step 209 is executed in the sector. If the traffic of a certain sector in the current period is the same or reduced compared with the traffic before the current period, step 205 is executed in the sector.

205, a disabling sequence of a carrier in each sector is configured according to the traffic information of the current period and the disabling sequence of the baseband boards.

If, in step 204, it is determined that the traffic of the sector in the current period is the same or reduced compared with the traffic before the period, the disabling sequence of a carrier in the sector is configured according to the traffic information of the current period and the disabling sequence of the baseband boards. Specifically, for example, the larger the number of users of a certain carrier is or the larger the traffic in the traffic information of the current period is, the latter the disabling sequence of the carrier is. If a label of disabling priority is pasted to the carrier, the disabling priority of the carrier is lower. And, based on consideration of the number of users and the traffic of the carrier, the disabling sequence of the baseband boards where the carrier is located also needs to be considered. The latter the disabling sequence of the baseband boards where the carrier is located is, the latter the disabling sequence of the carrier is, namely that the lower the disabling priority of the carrier is.

206, other than a covering carrier, carriers, whose loads are zeros, are disabled according to the disabling sequence of carrier(s) in a sector and the traffic information of the current period.

Each sector has a covering carrier, and the covering carrier is configured as being incapable of disablement to ensure the coverage of each sector. The last carrier in the disabling sequence of the carriers in each sector is configured as the covering carrier of the sector. When configuring the covering carrier, the covering carrier of each sector is configured as possible on a same baseband board.

After the disabling sequence of the carriers in each sector is configured, other than the covering carrier, the carriers, whose loads are zeros, are disabled according to the disabling sequence of the carrier(s) in each sector and the traffic information of the current period.

Specifically, a user on a front carrier in the disabling sequence of the carrier(s) in each sector is switched to a latter carrier in the disabling sequence of the carriers, and then a carrier whose load is zero is disabled. For example, there is a carrier 1, a carrier 2 and a carrier 3 in a certain sector, and the disabling sequence of the three carriers is the carrier 2 > the carrier 3 > the carrier 1, namely that the carrier 2 is preferentially disabled, and the carrier 1 is a covering carrier. When the traffic of the sector declines, the user of the carrier 2 is preferentially switched to the covering carrier 1, and then the carrier 2 is disabled. If the traffic of the carrier 3 in the sector is also low, the number of users of the carrier 3 is also small, and the traffic and the number of users of the carrier 1 are unsaturated, a user of the carrier 3 is switched to the covering carrier 1, and then the carrier 3 is disabled.

Please refer to Fig. 3, under the condition that the traffic is unchanged or reduced, steps of successively disabling carriers except the covering carrier, whose loads are zeros, according to the disabling sequence of the carriers in the sector and the traffic information of the current period, are specific as follows.

301, the number of users of each carrier on the headmost baseband board in the disabling sequence is acquired.

At first, according to the traffic information of the current period, the number of users of each carrier on the headmost baseband board in the disabling sequence is acquired, and the traffic of the carrier on the headmost baseband board in the disabling sequence may also be acquired, which is not limited herein.

302, whether there exists a carrier whose load is zero on the baseband board is determined.

After the number of users of each carrier on the baseband board is acquired, whether there exits a carrier whose load is zero on the baseband board is determined according to the acquired number of users. If there exists the carrier whose load is zero, step 303 is directly executed. If there exists no carrier whose load is zero, step 303 is skipped to directly executed step 304.

303, the carrier whose load is zero is disabled.

If it is determined that there exists a carrier whose load is zero on the selected baseband board in step 302, the carrier whose load is zero is disabled.

304, whether there exists a carrier whose load is not zero on the selected baseband board is determined.

If it is determined that there exists no carrier whose load is zero on the selected baseband board in step 302, or after the carrier whose load is zero in the selected baseband board is disabled in step 303, whether there exists a carrier whose load is not zero on the selected baseband board is determined. If there exists the carrier whose load is not zero, step 305 is executed. If there exists no carrier whose load is not zero, step 307 is executed.

305, whether there is a carrier on the selected baseband board satisfying an adjusting condition is determined.

If it is determined there exists a carrier whose load is not zero in step 304, whether a carrier on the selected baseband board satisfies the adjusting condition is determined, namely it is determined whether the carrier on the selected baseband board is a covering carrier being incapable of disablement. If the carrier is a covering carrier, the adjusting condition is not satisfied. Or it is determined whether the user and the service of the carrier on the selected baseband board can not be switched currently, if it can not be switched, the adjusting condition is not satisfied. The foregoing description is merely an example of determination about whether the adjusting condition is satisfied, which can not limit the present invention.

If it is determined a carrier on the selected baseband board satisfies the adjusting condition, step 306 is executed. If the adjusting condition is not satisfied, step 307 is executed.

306, a user on the carrier whose load is not zero in the selected baseband board is switched to a carrier outside the baseband board.

If it is determined the carrier on the selected baseband board satisfies the adjusting condition in step 305, a user on the carrier whose load is not zero in the selected baseband board is switched to a carrier outside the baseband board.

For example, a baseband board A, a baseband board B and a baseband board C are arranged in a base station, and the selected baseband board is A. Firstly, it is determined whether there exists a carrier *a* whose load is not zero in the baseband board A. If there exists the carrier *a* whose load is not zero in the baseband board A, it is determined that whether there exists a disabling carrier on a baseband board outside the baseband board A. If it is determined there exists a disabling carrier *b* on the baseband board B, power is supplied to the carrier *b,* a hot backup is performed for the carrier *a* in the carrier *b.* Then a user on the carrier *a* is switched to the carrier *b* performing the hot backup for the carrier *a,* and the carrier *b* is configured at the original carrier *a.* It is determined, by looping in sequence, whether there exists other carrier *a* whose load is not zero in the baseband board A till there exists no carrier whose load is not zero in the baseband board A, or there exists no disabling carrier on the other baseband boards except the baseband board A.

307, a carrier whose load is zero on the selected baseband board is disabled.

After the user on the carrier whose load is not zero in the selected baseband board is switched to the carrier outside the baseband board, the carrier whose load is zero on the selected baseband board is disabled.

308, it is determined whether baseband board(s) need to be checked have already been checked.

After one baseband board is checked and before a next baseband board needs to be checked is checked, it is determined firstly whether baseband boards need to be checked have been already checked. If all the baseband boards to be checked have already checked, the flow is ended. If the baseband boards to be checked have not checked completely, step 309 is executed.

309, the number of users of each carrier on a next baseband board is acquired according to the disabling sequence of the baseband boards.

If it is determined the baseband boards to be checked have not been checked completely in step 308, the number of users of each carrier on the next baseband board is acquired, and then return to step 302.

When traffic does not increase, users in each carrier of each sector are integrated to a certain or several carriers to make the disabled carriers locate on a same baseband board as possible, in order to create a condition for disabling a baseband board whose number of users is zero.

207, it is determined whether all the carriers of each baseband board in the base station are disabled in turn. If all is disabled, step 208 is executed. If there is a carrier not disabled, power is continuously supplied to the baseband board.

208, the baseband board is disabled.

If all carriers of the selected baseband board have been disabled already, the baseband board whose carriers are all disabled is powered off.

209, an enabling sequence of the carriers in a sector is configured according to the traffic information of the current period and the level of enabling state of each baseband board.

The enabling sequence of carriers is configured for disabled carriers. Under a condition that traffic of a sector increases, the base station preferentially enables a carrier in the sector, whose enabling sequence is in the front. The enabling sequence of the carriers is configured according to one or more parameters in the traffic information of the current period and the level of enabling state of each baseband board.

For example, the enabling sequence of the carriers is configured according to the level of enabling state of each baseband board. The higher the level of enabling state of the baseband board is, the closer to the top the enabling sequence of the carrier on the baseband board is. The lower the level of enabling state of the baseband board is, the latter the enabling sequence of the carrier on the baseband board is.

The enabling sequence of carriers may also be configured according to one or more parameters in the traffic information of the current period. For example, the enabling sequence of the carriers is configured according to the size of the traffic carried by each carrier or that of the number of users.

The enabling sequence of the carriers may also be configured by taking parameters in the traffic information of the current period and the level of enabling state of each baseband board under consideration together. Specific configurations may be different according to different conditions, however, thoughts mainly based on are consistent, namely to make more carriers and baseband boards in a disabling state to reduce the energy consumption of a baseband unit.

210, an access and switching sequence of a carrier is configured according to the traffic information of the current period and the enabling sequence of the carrier.

Under the condition that the traffic increases, there are many new users need to be accessed or switched to a carrier of a base station. The access and switching sequence of the carriers needs to be configured according to the traffic information of the current period and the enabling sequence of the carriers.

The configuration is performed according to the enabling sequence of the carriers. The closer to the top the enabling sequence of one carrier is, the closer to the top the access and switching sequence of the carrier is, namely a new user is preferentially accessed or switched to the carrier.

The access and switching sequence may also be configured according to the traffic information of the current period. For example, for the carriers on a same baseband board, the larger the number of users is, the higher the access and switching priority is, namely the closer to the top the access and switching sequence is.

The access and switching sequence may also be configured according to parameters in the traffic information of the current period and the enabling sequence of the carriers. Specific configurations may be different according to different conditions, however, thoughts mainly based on are consistent, namely new users to be accessed or switched are concentrated on a part of carriers, which makes carriers and baseband boards as many as possible enter or be in a disabled state to reduce the energy consumption of the baseband unit.

211, the carriers are enabled according to the enabling sequence of the carriers.

According to a specific service demand in the traffic information of the current period, a carrier with a high enabling priority is preferentially enabled, namely a carrier whose enabling sequence is in the front.

Furthermore, this embodiment further includes a step; after the flow of the current period is executed, the traffic information acquired before the current period is substituted by the traffic information acquired in the current period for use in next period.

In this embodiment, traffic information of a current period is analyzed. Under a condition that traffic does not increase compared with traffic before the current period, a disabling sequence of baseband boards and that of a carrier on the baseband board are configured to make users of a carrier, which are in a same sector, as possible be accessed to or switched to a same carrier or a few carriers with large traffic, a carrier whose load is not zero is as possible integrated to the same baseband board. Thus other baseband board whose load is zero is powered off, so that the energy consumption is reduced and resources are saved. And, under the condition that the traffic increases compared with the traffic before the current period, new accessed or switched users are integrated to a part of carriers, the carriers are enabled according to the preset enabling sequence of the carriers, which makes carriers and baseband boards as many as possible enter or be in the disabling state, so that the energy consumption of the baseband unit is reduced, and resources are saved.

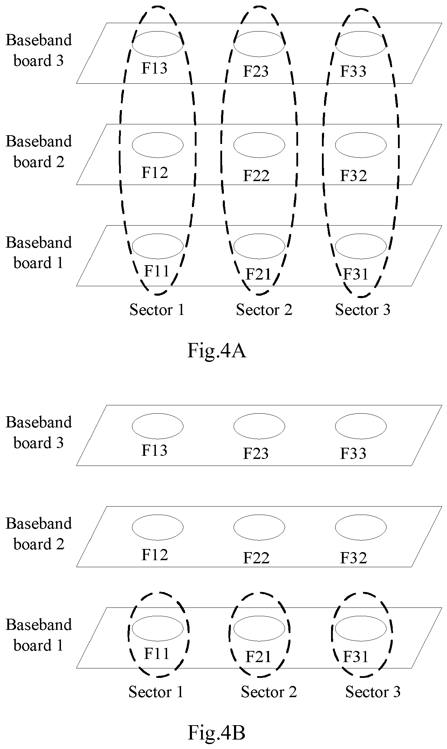

Please refer from Fig. 4A to Fig. 6. A technical solution of the present invention will be described in detail by describing a specific application scene.

Specifically, a technical solution of the present invention is mainly applied to a scene with multiple baseband boards and multiple carriers, where different frequencies are with a same coverage, and is particularly used in a time interval with no traffic or with low and medium traffic.

A mapping relation between a baseband board and a carrier may be in general divided into three configurations, and the three configurations will be specifically described below.

Configuration I: different carriers covering a same sector are configured on different baseband boards, and different carriers configured on a same baseband board cover different sectors. As shown in Fig. 4A, a sector 1 includes carriers F11, F12 and F13, a sector 2 includes carriers F21, F22 and F23, a sector 3 includes carriers F31, F32 and F33, the carriers F11, F21 and F31 are carried on a baseband board 1, the carriers F12, F22 and F32 are carried on a baseband board 2, and the carriers F13, F23 and F33 are carried on a baseband board 3.

A base station first acquires traffic information of a current period of a carrier in the base station. The traffic information includes the following parameters: traffic of each carrier, the number of users of each carrier carried on each baseband board, traffic of each carrier carried on each baseband board, the number of disabled carriers on each baseband board, the number of enabled carriers on each baseband board, energy consumption of each baseband board and the like.

After the traffic information of the current period of the carriers in the base station is acquired, a disabling priority and a level of enabling state of a baseband board are configured according to the traffic information of the current period. For example, a disabling sequence is configured according to the sum of the number of users of each carrier on the baseband board. The disabling priority of the baseband board with a larger number of users is lower. It is supposed that the disabling priorities of baseband boards in the base station are the sector 2> the sector 1> the sector 3 and the levels of enabling state are the sector 3> the sector 1> the sector 2.

Traffic information stored locally before the period is acquired. The traffic information acquired in the period is compared with the traffic information before the period to determine whether the traffic of the current period increases. It is supposed that the result of comparing the traffic information acquired in the current period with the traffic information before the current period in each sector is that the traffic of the current period is reduced compared with the traffic before the current period, a disabling sequence of carriers in each sector is configured according to the traffic information of the current period and the disabling sequence of all baseband boards. It is supposed that the disabling sequence of the carriers in each sector is configured as:
in the sector 1, F11>F12>F13, wherein F31 is a covering carrier of the sector 1;
in the sector 2, F22>F21>F23, wherein F23 is a covering carrier of the sector 2; and,
in the sector 3, F32>F31>F33, wherein F33 is a covering carrier of the sector 3.

Then carriers in each sector are integrated.

Specifically, for example, the loads of F11 and F22 are zeros, and F12, F21, F32 and F31 satisfy an adjusting condition. the carriers F11 and F22 are disabled according to an executing flow in Fig. 3, then users of the carrier F12 are switched to the carrier F13, the users of the carrier F21 are switched to the carrier F23, and the users of the carriers F32 and F31 are switched to the carrier F33.

After carriers in each sector are integrated, the carriers whose loads are zeros are disabled, namely disabling F11, F12, F22, F21, F32 and F31. Then a baseband board whose load is zero is disabled, namely disabling the baseband board 1 and the baseband board 2.

The coverage condition of the adjusted carriers is shown in Fig. 4B, wherein both the baseband board 2 and the baseband board 3 are disabled, and only the baseband board 1 is in a working state.

Under the condition that the traffic is small, carriers in each sector are integrated, users are switched or accessed to a same baseband board or several baseband boards as possible. Then a baseband board whose load is zero is disabled, which reduces the energy consumption, and saves resources.

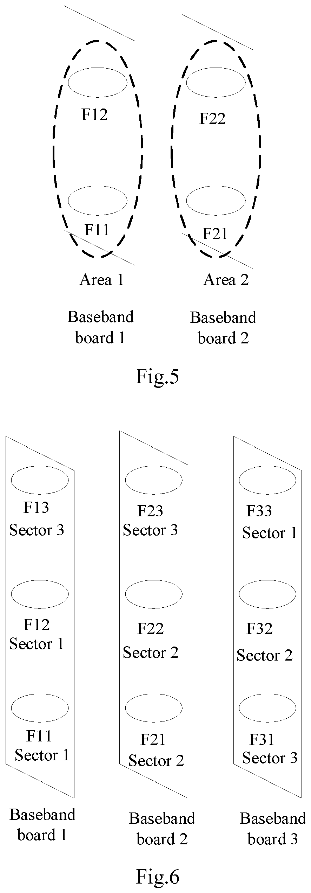

Configuration II: different carriers covering a same sector are configured on a same baseband board, and different carriers configured on a same baseband board cover a same sector. As shown in Fig. 5, the sector 1 includes a carrier F11 and a carrier F12, the sector 2 includes a carrier F21 and a carrier F22, the carrier F11 and the carrier F12 are carried on a baseband board 1, and the carrier F21 and the carrier F22 are carried on a baseband board 2.

In this configuration, even if traffic is very low, a baseband board can not be disabled so as not to affect coverage. In order to save energy, when a baseband unit begins to start, positions of carriers in the baseband boards are re-configured in a manner of configuration III, which makes carriers of different sectors be carried on a same baseband board. Or in a working process of a baseband unit, a carrier is switched and adjusted according to the disabling priority of a carrier, which makes carriers of different sectors being carried on the same baseband board.

In this configuration, after carriers on the baseband boards are arranged as carriers of different sectors being carried on a same baseband board, the carriers in the base station are integrated according to a method of integrating and controlling carrier in the above-mentioned configuration I, in order to power off a baseband board.

Configuration III: different carriers configured on a same baseband board may cover different sectors or a same sector. As shown in Fig. 6, a sector 1 includes carriers F11, F12 and F33, a sector 2 includes carriers F21, F22 and F32, and a sector 3 includes carriers F13, F23 and F31. The carriers F11, F12 and F13 are carried on a baseband board 1, wherein two carriers cover the sector 1 and one carrier covers the sector 3. The carriers F21, F22 and F23 are carried on a baseband board 2, wherein two carriers cover the sector 2, and one carrier covers the sector 3. The carriers F31, F32 and F33 are carried on a baseband board 3, and cover the sector 3, the sector 2 and the sector 1 respectively.

In the configuration III, when traffic of each of three sectors is very low, the baseband board 1 and the baseband board 2 are disabled, and the baseband board 3 is reserved. There is one carrier working in each sector, so that coverage can be ensured and the objective of saving energy can also be achieved. When the traffic of each of the three sectors is relatively low, the baseband board 3 is disabled, and the baseband board 1 and the baseband board 2 are reserved. There are two carriers work in each sector. When the traffic of the sector 2 is very low and the traffic of the sector 1 is very high, the baseband board 2 is disabled, which makes that the sector 2 has one carrier, the sector 3 has two carriers, and the sector 1 has three carriers. Similarly, when the traffic of the sector 1 is very low and the traffic of the sector 2 is very high, the baseband board 1 is disabled, and the specific processes of adjusting and controlling carriers is referred to the specific description in the embodiment II or in configuration I of this application example, which is not described redundantly herein.

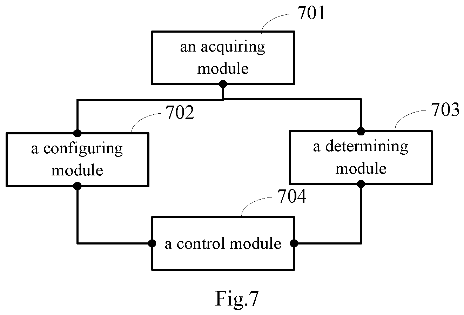

With reference to Fig. 7, a first embodiment of a base station device of the present invention includes:
an acquiring module 701, configured to acquire traffic information of a current period on each baseband board in a base station itself, wherein, the traffic information includes traffic of each sector;
a configuring module 702, configured to configure a disabling sequence and a level of enabling state of all baseband boards according to the traffic information of the current period acquired by the acquiring module 701;
a determining module 703, configured to determine a change situation of the traffic of each sector according to traffic information before the current period, which is stored locally, and the traffic information of the current period acquired by the acquiring module 701; and,
a control module 704, configured to control carrier(s) in each sector according to the change situation of the traffic of each sector determined by the determining module 703 and the disabling sequence of all baseband boards configured by the configuring module 702, and control the carrier(s) in each sector according to the change situation of the traffic of each sector determined by the determining module 703 and the level of enabling state of each baseband board configured by the configuring module 702.

In this embodiment, through analyzing traffic information of a current period, configuring a disabling sequence and an enabling state level of baseband boards, then determining change of traffic of each sector according to traffic information stored locally before the current period and traffic information of the current period, and controlling a carrier in a sector according to the change of the traffic, the disabling sequence and the enabling state level of the baseband boards, the method provided in the present invention, in a similar situation, reduces energy consumption of a base station unit and saves resources.

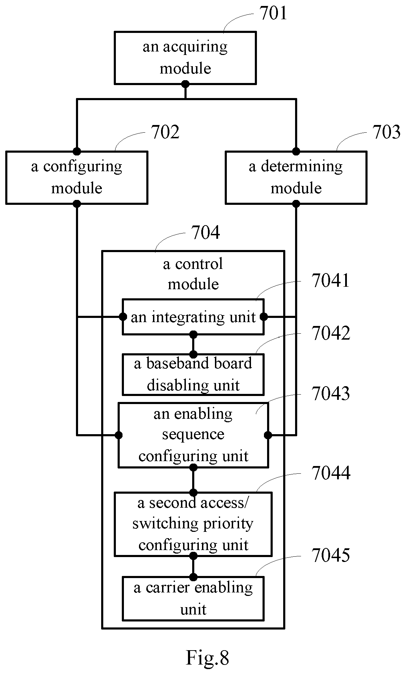

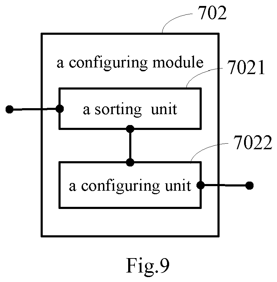

Please refer to Fig. 8 and Fig. 9, a second embodiment of a base station device of the present invention includes the following modules.

Please refer to Fig. 8, the base station device in this embodiment includes:
an acquiring module 701, configured to acquire traffic information of a current period of carriers carried on each baseband board in a current base station, wherein, the traffic information includes the following parameters: traffic of each carrier, the number of users of each carrier carried on each baseband board, traffic of each carrier carried on each baseband board, the number of disabled carriers on each baseband board, the number of enabled carriers on each baseband board, energy consumption of each baseband board and the like; and furthermore, for parameters related to a baseband board, parameters part of baseband board in the base station may be acquired, and parameters of each baseband board in the base station may also be acquired, which is not limited herein;
a configuring module 702, configured to configure a disabling sequence and a level of enabling state of all baseband boards according to the traffic information of the current period acquired by the acquiring module 701, wherein, the disabling sequence of baseband boards is a sequence that the baseband board is disabled under a condition that traffic is reduced, and the level of enabling state of each baseband board indicates an enabling degree of a baseband board, wherein when all carriers on the baseband board are enabled with full-loads, the enabling state of the baseband board is the highest, and when the baseband board is in a disabled state, the enabling state of the baseband board is the lowest;
a determining module 703, configured to determine a change situation of traffic of each sector according to traffic information stored locally before the current period and the traffic information of the current period acquired by the acquiring module 701; and,
a control module 704, configured to control carrier(s) in each sector according to the change situation of the traffic of each sector determined by the determining module 703 and the disabling sequence of all baseband boards configured by the configuring module 702, and control the carrier(s) in each sector according to the change situation of the traffic of each sector determined by the determining module 703 and the level of enabling state of each baseband board configured by the configuring module 702.

Furthermore, the control module 704 includes:
an integrating unit 7041, configured to integrate the carrier(s) in each sector according to the traffic information of the current period and the disabling sequence of all baseband boards when the traffic of the sector does not increase; and,
a baseband board disabling unit 7042, configured to disable a baseband board according to an integrated situation of the carrier(s) integrated by the integrating unit 7041 in the sector,
wherein, the integrating unit 7041 includes:
   a disabling sequence configuring unit, configured to configure a disabling sequence of carrier(s) in each sector according to the traffic information of the current period and the disabling sequence of all baseband boards;
   a first access/switching priority configuring unit, configured to adjust an access sequence and a switching sequence of the carrier(s) in each sector according to the traffic information of the current period and/or the disabling sequence, so that a user or a service may be accessed or switched to a carrier placed first in the access sequence or the switching sequence; and,
   a traffic adjusting unit, configured to adjust the traffic of the carrier(s) according to the disabling sequence of the carrier(s), the traffic information of the current period and the access sequence and switching sequence of the carrier(s), wherein when a carrier whose load is zero appears, the baseband board disabling unit 7042 disables the carrier whose load is zero.

The baseband board disabling unit 7042 includes:
a switching unit, configured to switch a carrier whose load is not zero on a baseband board placed first in the disabling sequence of the baseband boards, to a baseband board placed behind this baseband board in the disabling sequence of the baseband boards; and,
a disabling unit, configured to, when there is a baseband board whose load is zero, disable the baseband board whose load is zero.

Furthermore, the control module 704 further includes:
an enabling sequence configuring unit 7043, configured to, when the determining module 703 determines that the traffic of each sector increase, configure an enabling sequence of the carrier(s) in each sector according to the traffic information of the current period and/or the level of enabling state of each baseband board;
a second access/switching priority configuring unit 7044, configured to adjust a access sequence and switching sequence of the carrier(s) in each sector according to the traffic information of the current period and/or the enabling sequence, so that a user or a service may be accessed or switched to a carrier placed first in the access sequence or the switching sequence; and,
a carrier enabling unit 7045, configured to enable a carrier according to the traffic information of the current period and the enabling sequence of the carrier(s).

Please refer to Fig. 9, furthermore, the configuring module 702 includes:
a sorting unit 7021, configured to sorting by size according to the number of users or traffic of each carrier, or acquire result(s) of calculation by using a preset calculation method according to the number of users of each carrier and the number of disabled carriers and sort the result(s) of calculation by size; and,
a configuring unit 7022, configured to configure the disabling sequence and level of enabling state of all baseband boards according to the sorting by size of the sorting unit 7021.

In this embodiment, traffic information of a current period is analyzed. Under a condition that traffic does not increase compared with traffic before the current period, a disabling sequence of baseband boards and that of a carrier on the baseband board are configured to make users of a carrier, which are in a same sector, as possible be accessed to or switched to a same carrier or a few carriers with large traffic, a carrier whose load is not zero is as possible integrated to the same baseband board. Thus other baseband board whose load is zero is powered off, so that the energy consumption is reduced and resources are saved. And, under the condition that the traffic increase compared with the traffic before the current period, new accessed or switched users are integrated to a part of carriers, the carriers are enabled according to the preset enabling sequence of carrier, which makes carriers and baseband boards as many as possible enter or be in the disabling state, so that the energy consumption of the baseband unit is reduced, and resources are saved.

It should be appreciated for those of ordinary skill in the art that all or a part of steps in various methods of the above-mentioned embodiments may be completed with a program instructing relevant hardware. The program may be stored in a computer readable storage medium. The storage medium may include a read only memory (ROM, Read Only Memory), a random access memory (RAM, Random Access Memory), a magnetic disk or an optical disk and the like. The carrier control method and the corresponding base station device provided in the embodiments of the present invention are introduced in detail above.

## Claims

1. A carrier control method, comprising:
acquiring (101) traffic information of a current period on all baseband boards in a base station itself, the traffic information comprising traffic of each sector, wherein a baseband board is a physical media for carrying a carrier, one or more carriers configured on each baseband board cover one or more sectors;
**characterized by** configuring (102), according to the traffic information of the current period, a disabling sequence of all the baseband boards;
determining (103), according to stored traffic information of each sector before the current period and the traffic information of the current period, a change situation of the traffic of each sector; and,
controlling (104), according to the change situation of the each sector and the disabling sequence of all the baseband boards, the carriers in the each sector respectively.

2. The method according to claim 1, wherein a step of controlling (104), according to the change situation of each sector and the disabling sequence of all the baseband boards, the carriers in each sector respectively, comprises:
configuring a disabling sequence of the carriers in each sector according to the traffic information of the current period and the disabling sequence of all the baseband boards if the traffic of the sector does not increase;
adjusting an access sequence and a switching sequence of the carriers in each sector according to the traffic information of the current period and the disabling sequence of the carriers in each sector, wherein the access sequence and the switching sequence of the carriers are used for a user or a service to be accessed or switched to a carrier placed first in the access sequence or the switching sequence;
adjusting traffic of the carriers in each sector according to the disabling sequence of the carriers, the traffic information of the current period and the access sequence and the switching sequence of the carriers, wherein when a carrier whose load is zero appears, disabling the carrier whose load is zero; and
disabling a baseband board whose load is zero according to an integrated situation of the carriers in the each sector.

3. The method according to claim 2, wherein a step of adjusting the traffic of the carriers in each sector according to the disabling sequence of the carriers, the traffic information of the current period and the access sequence and the switching sequence of the carriers, specifically is:
switching a user of a carrier placed first in the disabling sequence of the carriers, to a carrier placed in behind in the disabling sequence of the carriers in each sector.

4. The method according to claim 2, wherein a step of disabling the baseband board whose load is zero according to the integrated situation of the carriers in each sector comprises:
switching a carrier, whose load is not zero, on a baseband board placed first in the disabling sequence of all the baseband boards, to a baseband board placed behind the baseband board in the disabling sequence of the baseband boards; and,
disabling, if there is a baseband board whose load is zero, the baseband board whose load is zero.

5. The method according to claim 1, after a step of acquiring (101) the traffic information of the current period on each baseband board in the base station, further comprising:
configuring a level of enabling state of the each baseband board according to the traffic information of the current period.

6. The method according to claim 1, wherein the traffic information of the current period further comprises: the number of users of each carrier carried on the baseband board, traffic of each carrier carried on the baseband board and the number of disabled carriers on the baseband board; and,
a step of configuring (102) the disabling sequence of all the baseband boards according to the traffic information of the current period comprises:
sorting by size according to the number of users of each carrier carried on the baseband board or the traffic of each carrier carried on the baseband board, or acquiring, according to the number of users of the carrier and the number of disabled carriers on the baseband board, one or more results of calculation by using a preset calculation method and sorting the results of calculation by size; and,
configuring the disabling sequence of all the baseband boards according to the sorting by size.

7. A base station device, comprising:
an acquiring module (701), configured to acquire traffic information of a current period on all baseband boards in the base station device, the traffic information comprising traffic of each sector, wherein a baseband board is a physical media for carrying a carrier, and one or more carriers configured on each baseband board cover one or more sectors;
**characterized by** a configuring module (702), configured to configure, according to the traffic information of the current period, a disabling sequence of all the baseband boards;
a determining module (703), configured to determine, according to traffic information of the each sector before the current period, which is stored locally, and the traffic information of the current period, a change situation of the traffic of each sector; and,
a control module (704), configured to control, according to the change situation of the each sector and the disabling sequence of all the baseband boards, the carriers in the each sector respectively.

8. The device according to claim 7, wherein the control module (704) comprises:
a disabling sequence configuring unit, configured to configure a disabling sequence of the carriers in each sector according to the traffic information of the current period and the disabling sequence of all the baseband boards when the traffic of the sector does not increase;
a first access and switching priority configuring unit, configured to adjust an access sequence and a switching sequence of the carriers in each sector according to the traffic information of the current period and the disabling sequence, wherein the access sequence and the switching sequence of the carriers are used for a user or a service to be accessed or switched to a carrier placed first in the access sequence or the switching sequence;
a traffic adjusting unit, configured to adjust traffic of the carriers in each sector according to the disabling sequence of the carriers, the traffic information of the current period and the access sequence and the switching sequence of the carriers; and,
a baseband board disabling unit (7042), configured to disable a baseband board whose load is zero according to an integrated situation of the carriers in each sector.

9. The device according to claim 8, wherein the baseband board disabling unit (7042) comprises:
a switching unit, configured to switch a carrier, whose load is not zero, on a baseband board placed first in the disabling sequence of all the baseband boards, to a baseband board placed behind the baseband board in the disabling sequence of the baseband boards; and,
a disabling unit, configured to disable, when there is a baseband board whose load is zero, the baseband board whose load is zero.

10. The device according to claim 7, wherein the configuring module (702) is further configured to configure a level of enabling state of the each baseband board according to the traffic information of the current period.

11. The device according to claim 7, wherein the traffic information of the current period further comprises following parameters: the number of users of each carrier carried on the baseband board, traffic of each carrier carried on the baseband board and the number of disabled carriers on the baseband board; and,
the configuring module (702) comprises:
a sorting unit (7021), configured to sort by size according to the number of users of each carrier carried on the baseband board or the traffic of each carrier carried on the baseband board, or acquire, according to the number of users of the carrier and the number of disabled carriers on the baseband board, one or more results of calculation by using a preset calculation method and sorting the results of calculation by size; and,
a configuring unit (7022), configured to configure the disabling sequence of all the baseband boards according to the sorting by size.

## Patentansprüche

1. Trägersteuerungsverfahren, umfassend:
Erfassen (101) einer Verkehrsinformation eines aktuellen Zeitraums auf allen Basisband-Boards in einer Basisstation selbst, wobei die Verkehrsinformation den Verkehr jedes Sektors umfasst, wobei ein Basisband-Board ein physisches Medium zum Tragen eines Trägers ist, wobei ein oder mehrere Träger, die auf jedem Basisband-Board konfiguriert sind, einen oder mehrere Sektoren abdecken;
durch Folgendes gekennzeichnet:
Konfigurieren (102), gemäß der Verkehrsinformation des aktuellen Zeitraums, einer Deaktivierungssequenz aller Basisband-Boards;
Bestimmen (103), gemäß einer gespeicherten Verkehrsinformation jedes Sektors vor dem aktuellen Zeitraum und der Verkehrsinformation des aktuellen Zeitraums, einer Änderungssituation des Verkehrs jedes Sektors; und,
Steuern (104), gemäß der Änderungssituation jedes Sektors und der Deaktivierungssequenz aller Basisband-Boards, der jeweiligen Träger in jedem Sektor.

2. Verfahren nach Anspruch 1, wobei ein Schritt des Steuerns (104), gemäß der Änderungssituation jedes Sektors und der Deaktivierungssequenz aller Basisband-Boards, der jeweiligen Träger in jedem Sektor umfasst:
Konfigurieren einer Deaktivierungssequenz der Träger in jedem Sektor gemäß der Verkehrsinformation des aktuellen Zeitraums und der Deaktivierungssequenz aller Basisband-Boards, wenn der Verkehr des Sektors nicht zunimmt;
Anpassen einer Zugriffssequenz und einer Umschaltsequenz der Träger in jedem Sektor gemäß der Verkehrsinformation des aktuellen Zeitraums und der Deaktivierungssequenz der Träger in jedem Sektor, wobei die Zugriffssequenz und die Umschaltsequenz der Träger für einen Benutzer oder einen Dienst verwendet werden, auf den zugegriffen oder der auf einen Träger umgeschaltet werden soll, der zuerst in die Zugriffssequenz oder die Umschaltsequenz platziert wird;
Anpassen des Verkehrs der Träger in jedem Sektor gemäß der Deaktivierungssequenz der Träger, der Verkehrsinformation des aktuellen Zeitraums und der Zugriffssequenz und der Umschaltsequenz der Träger, wobei, wenn ein Träger , dessen Last null ist, erscheint, der Träger deaktiviert wird, dessen Last null ist; und
Deaktivieren eines Basisband-Boards, dessen Last null ist, gemäß einer integrierten Situation der Träger in jedem Sektor.

3. Verfahren nach Anspruch 2, wobei ein Schritt des Anpassens des Verkehrs der Träger in jedem Sektor gemäß der Deaktivierungssequenz der Träger, der Verkehrsinformation des aktuellen Zeitraums und der Zugriffssequenz und der Umschaltsequenz der Träger insbesondere beinhaltet:
Umschalten eines Benutzers von einem Träger, der zuerst in der Deaktivierungssequenz der Träger platziert ist, zu einem Träger, der hinten in der Deaktivierungssequenz der Träger in jedem Sektor platziert ist.

4. Verfahren nach Anspruch 2, wobei ein Schritt des Deaktivierens des Basisband-Boards, dessen Last null ist, gemäß der integrierten Situation der Träger in jedem Sektor, umfasst:
Umschalten eines Trägers, dessen Last nicht null ist, auf einem Basisband-Board, das als erstes in der Deaktivierungssequenz aller Basisband-Boards platziert ist, zu einem Basisband-Board, das hinter dem Basisband-Board in der Deaktivierungssequenz der Basisband-Boards platziert ist; und,
Deaktivieren, wenn ein Basisband-Board vorhanden ist, dessen Last null ist, des Basisband-Boards, dessen Last null ist.

5. Verfahren nach Anspruch 1, nach einem Schritt des Erfassens (101) der Verkehrsinformation des aktuellen Zeitraums auf jedem Basisband-Board in der Basisstation ferner umfassend:
Konfigurieren einer Stufe eines Aktivierungszustands jedes Basisband-Boards gemäß der Verkehrsinformation des aktuellen Zeitraums.

6. Verfahren nach Anspruch 1, wobei die Verkehrsinformation des aktuellen Zeitraums ferner umfasst: die Anzahl von Benutzern jedes Trägers, der auf dem Basisband-Board getragen wird, den Verkehr jedes auf dem Basisband-Board getragenen Trägers und die Anzahl von deaktivierten Trägern auf dem Basisband-Board; und,
ein Schritt des Konfigurierens (102) der Deaktivierungssequenz aller Basisband-Boards gemäß der Verkehrsinformation des aktuellen Zeitraums umfasst:
Sortieren nach Größe gemäß der Anzahl von Benutzern jedes Trägers, der auf dem Basisband-Board getragen wird, oder dem Verkehr jedes auf dem Basisband-Board getragenen Trägers, oder Erfassen, gemäß der Anzahl von Benutzern des Trägers und der Anzahl von deaktivierten Trägern auf dem Basisband-Board, eines oder mehrerer Ergebnisse der Berechnung unter Verwendung einer voreingestellten Berechnungsmethode und Sortieren der Ergebnisse der Berechnung nach Größe; und,
Konfigurieren der Deaktivierungssequenz aller Basisband-Boards gemäß der Sortierung nach Größe.

7. Basisstationsvorrichtung, umfassend:
ein Erfassungsmodul (701), das konfiguriert ist, um eine Verkehrsinformation eines aktuellen Zeitraums auf allen Basisband-Boards in der Basisstationsvorrichtung zu erfassen, wobei die Verkehrsinformation den Verkehr jedes Sektors umfasst, wobei ein Basisband-Board ein physisches Medium zum Tragen eines Trägers ist, und ein oder mehrere Träger, die auf jedem Basisband-Board konfiguriert sind, einen oder mehrere Sektoren abdecken;
durch Folgendes gekennzeichnet:
ein Konfigurationsmodul (702), das konfiguriert ist, um gemäß der Verkehrsinformation des aktuellen Zeitraums eine Deaktivierungssequenz aller Basisband-Boards zu konfigurieren;
ein Bestimmungsmodul (703), das konfiguriert ist, um gemäß einer Verkehrsinformation jedes Sektors vor dem aktuellen Zeitraum die lokal gespeichert ist, und der Verkehrsinformation des aktuellen Zeitraums eine Änderungssituation des Verkehrs jedes Sektors zu bestimmen; und
ein Steuermodul (704), das konfiguriert ist, um gemäß der Änderungssituation jedes Sektors und der Deaktivierungssequenz aller Basisband-Boards die jeweiligen Träger in jedem Sektor zu steuern.

8. Vorrichtung nach Anspruch 7, wobei das Steuermodul (704) umfasst:
eine Deaktivierungssequenzkonfigurationseinheit, die konfiguriert ist, um eine Deaktivierungssequenz der Träger in jedem Sektor gemäß der Verkehrsinformation des aktuellen Zeitraums und der Deaktivierungssequenz aller Basisband-Boards zu konfigurieren, wenn der Verkehr des Sektors nicht zunimmt;
eine erste Zugriffs- und Umschaltprioritätskonfigurationseinheit, die konfiguriert ist, um eine Zugriffssequenz und eine Umschaltsequenz der Träger in jedem Sektor gemäß der Verkehrsinformation des aktuellen Zeitraums und der Deaktivierungssequenz anzupassen, wobei die Zugriffssequenz und die Umschaltsequenz der Träger für einen Benutzer oder einen Dienst verwendet werden, auf den zugegriffen oder der auf einen Träger umgeschaltet werden soll, der zuerst in der Zugriffssequenz oder der Umschaltsequenz platziert ist;
eine Verkehrsanpassungseinheit, die konfiguriert ist, um den Verkehr der Träger in jedem Sektor gemäß der Deaktivierungssequenz der Träger, der Verkehrsinformation des aktuellen Zeitraums und der Zugriffssequenz und der Umschaltsequenz der Träger anzupassen; und
eine Basisband-Board-Deaktivierungseinheit (7042), die konfiguriert ist, um ein Basisband-Board, dessen Last null ist, gemäß einer integrierten Situation der Träger in jedem Sektor zu deaktivieren.

9. Vorrichtung nach Anspruch 8, wobei die Basisband-Board-Deaktivierungseinheit (7042) umfasst:
eine Umschalteinheit, die konfiguriert ist, um einen Träger, dessen Last nicht null ist, auf einem Basisband-Board, das als erstes in der Deaktivierungssequenz aller Basisband-Boards platziert ist, zu einem Basisband-Board, das hinter dem Basisband-Board in der Deaktivierungssequenz der Basisband-Boards platziert ist, umzuschalten; und
eine Deaktivierungseinheit, die konfiguriert ist, um, wenn ein Basisband-Board vorhanden ist, dessen Last null ist, das Basisband-Board, dessen Last null ist, zu deaktivieren.

10. Vorrichtung nach Anspruch 7, wobei das Konfigurationsmodul (702) ferner konfiguriert ist, um eine Stufe eines Aktivierungszustands jedes Basisband-Boards gemäß der Verkehrsinformation des aktuellen Zeitraums zu konfigurieren.

11. Vorrichtung nach Anspruch 7, wobei die Verkehrsinformation des aktuellen Zeitraums ferner die folgenden Parameter umfasst: die Anzahl von Benutzern jedes Trägers, der auf dem Basisband-Board getragen wird, den Verkehr jedes auf dem Basisband-Board getragenen Trägers und die Anzahl von deaktivierten Trägern auf dem Basisband-Board; und
das Konfigurationsmodul (702) umfasst:
eine Sortiereinheit (7021), die konfiguriert ist, um ein oder mehrere Ergebnisse der Berechnung unter Verwendung einer voreingestellten Berechnungsmethode gemäß der Anzahl von Benutzern jedes Trägers, der auf dem Basisband-Board getragen wird, oder dem Verkehr jedes auf dem Basisband-Board getragenen Trägers nach Größe zu sortieren, oder gemäß der Anzahl von Benutzern des Trägers und der Anzahl von deaktivierten Trägern auf dem Basisband-Board zu erfassen und die Ergebnisse der Berechnung nach Größe zu sortieren; und
eine Konfigurationseinheit (7022), die konfiguriert ist, um die Deaktivierungssequenz aller Basisband-Boards gemäß der Sortierung nach Größe zu konfigurieren.

## Revendications

1. Procédé de commande de porteuse comprenant :
l'acquisition (101) d'informations sur le trafic d'une période courante sur tous les circuits en bande de base dans une station de base elle-même, les informations sur le trafic comprenant le trafic de chaque secteur, un circuit en bande de base étant un support physique destiné à transporter une porteuse, une ou plusieurs porteuses configurées sur chaque circuit en bande de base couvrant un ou plusieurs secteurs,
**caractérisé par**
la configuration (102), en fonction des informations sur le trafic de la période courante, d'une séquence de désactivation de tous les circuits en bande de base,
la détermination (103), en fonction d'informations stockées sur le trafic de chaque secteur avant la période courante et des informations sur le trafic de la période courante, d'une situation de changement du trafic de chaque secteur, et
la commande respective (104), en fonction de la situation de changement de chaque secteur et de la séquence de désactivation de tous les circuits en bande de base, des porteuses dans chaque secteur.

2. Procédé selon la revendication 1, dans lequel l'étape de commande respective (104), en fonction de la situation de changement de chaque secteur et de la séquence de désactivation de tous les circuits en bande de base, des porteuses dans chaque secteur comprend :
la configuration d'une séquence de désactivation des porteuses dans chaque secteur en fonction des informations sur le trafic de la période courante et de la séquence de désactivation de tous les circuits en bande de base si le trafic du secteur n'augmente pas,
l'ajustement d'une séquence d'accès et d'une séquence de commutation des porteuses dans chaque secteur en fonction des informations sur le trafic de la période courante et de la séquence de désactivation des porteuses dans chaque secteur, la séquence d'accès et la séquence de commutation des porteuses étant utilisées pour un utilisateur ou un service auquel faire accès ou à commuter sur une porteuse placée en premier dans la séquence d'accès ou dans la séquence de commutation,
l'ajustement du trafic des porteuses dans chaque secteur en fonction de la séquence de désactivation des porteuses, des informations sur le trafic de la période courante, de la séquence d'accès et de la séquence de commutation des porteuses, dans lequel,
lorsqu'une porteuse dont la charge est nulle apparaît, il y a désactivation de la porteuse dont la charge est nulle, et
la désactivation d'un circuit en bande de base dont la charge est nulle en fonction d'une situation intégrée des porteuses dans chaque secteur.

3. Procédé selon la revendication 2, dans lequel l'étape d'ajustement du trafic des porteuses dans chaque secteur en fonction de la séquence de désactivation de porteuses, des informations sur le trafic de la période courante, de la séquence d'accès et de la séquence de commutation des porteuses représente en particulier :
la commutation de l'utilisateur d'une porteuse, placée en premier dans la séquence de désactivation des porteuses, sur une porteuse placée derrière dans la séquence de désactivation des porteuses dans chaque secteur.

4. Procédé selon la revendication 2, dans lequel l'étape de désactivation du circuit en bande de base dont la charge est nulle en fonction de la situation intégrée des porteuses dans chaque secteur comprend :
la commutation d'une porteuse dont la charge n'est pas nulle sur un circuit en bande de base, placé en premier dans la séquence de désactivation de tous les circuits en bande de base, vers un circuit en bande de base placé derrière le circuit en bande de base dans la séquence de désactivation des circuits en bande de base, et
la désactivation, s'il existe un circuit en bande de base dont la charge est nulle, du circuit en bande de base dont la charge est nulle.

5. Procédé selon la revendication 1, comprenant en outre, après l'étape d'acquisition (101) des informations sur le trafic de la période courante sur chaque circuit en bande de base dans la station de base :
la configuration du niveau d'état d'activation de chaque circuit en bande de base en fonction des informations sur le trafic de la période courante.

6. Procédé selon la revendication 1, dans lequel les informations sur le trafic de la période courante comprennent en outre : le nombre d'utilisateurs de chaque porteuse transportée sur le circuit en bande de base, le trafic de chaque porteuse transportée sur le circuit en bande de base et le nombre de porteuses désactivées sur le circuit en bande de base, et
l'étape de configuration (102) de la séquence de désactivation de tous les circuits en bande de base en fonction des informations sur le trafic de la période courante comprend :
le tri par taille en fonction du nombre d'utilisateurs de chaque porteuse transportée sur le circuit en bande de base, ou bien du trafic de chaque porteuse transportée sur le circuit en bande de base, ou bien l'acquisition, en fonction du nombre d'utilisateurs de la porteuse et du nombre de porteuses désactivées sur le circuit en bande de base, d'un ou de plusieurs résultats de calcul en utilisant un procédé de calcul prédéfini, ainsi que le tri des résultats du calcul par taille, et
la configuration de la séquence de désactivation de tous les circuits en bande de base en fonction du tri par taille.

7. Dispositif formant station de base comprenant :
un module d'acquisition (701), configuré pour acquérir des informations sur le trafic d'une période courante sur tous les circuits en bande de base dans la station de base, les informations sur le trafic comprenant le trafic de chaque secteur, un circuit en bande de base étant un support physique destiné à transporter une porteuse, et une ou plusieurs porteuses configurées sur chaque circuit en bande de base couvrant un ou plusieurs secteurs,
**caractérisé par**
un module de configuration (702), constitué pour configurer, en fonction des informations sur le trafic de la période courante, une séquence de désactivation de tous les circuits en bande de base,
un module de détermination (703), configuré pour déterminer, en fonction d'informations sur le trafic de chaque secteur avant la période courante, lesquelles sont stockées localement, et des informations sur le trafic de la période courante, une situation de changement du trafic de chaque secteur, et
un module de commande (704), configuré pour commander respectivement, en fonction de la situation de changement de chaque secteur et de la séquence de désactivation de tous les circuits en bande de base, les porteuses dans chaque secteur.

8. Dispositif selon la revendication 7, dans lequel le module de commande (704) comprend :
une unité de configuration de séquence de désactivation constituée pour configurer une séquence de désactivation des porteuses dans chaque secteur en fonction des informations sur le trafic de la période courante et de la séquence de désactivation de tous les circuits en bande de base lorsque le trafic du secteur n'augmente pas,
une unité de configuration de premier accès et de priorité de commutation configurée pour ajuster une séquence d'accès et une séquence de commutation des porteuses dans chaque secteur en fonction des informations sur le trafic de la période courante et de la séquence de désactivation, la séquence d'accès et la séquence de commutation des porteuses étant utilisées pour un utilisateur ou un service auquel faire accès ou à commuter sur une porteuse placée en premier dans la séquence d'accès ou dans la séquence de commutation,
une unité d'ajustement de trafic, configurée pour ajuster le trafic des porteuses dans chaque secteur en fonction de la séquence de désactivation des porteuses, des informations sur le trafic de la période courante, de la séquence d'accès et de la séquence de commutation des porteuses, et
une unité de désactivation de circuit en bande de base (7042) configurée pour désactiver un circuit en bande de base dont la charge est nulle en fonction d'une situation intégrée des porteuses dans chaque secteur.

9. Dispositif selon la revendication 8, dans lequel l'unité de désactivation de circuit en bande de base (7042) comprend :
une unité de commutation configurée pour commuter une porteuse dont la charge n'est pas nulle sur un circuit en bande de base, placé en premier dans la séquence de désactivation de tous les circuits en bande de base, sur un circuit en bande de base placé derrière le circuit en bande de base dans la séquence de désactivation des circuits en bande de base, et
une unité de désactivation configurée pour désactiver, lorsqu'il existe un circuit en bande de base dont la charge est nulle, le circuit en bande de base dont la charge est nulle.

10. Dispositif selon la revendication 7, dans lequel le module de configuration (702) est en outre constitué pour configurer un niveau d'état d'activation de chaque circuit en bande de base en fonction des informations sur le trafic de la période courante.

11. Dispositif selon la revendication 7, dans lequel les informations sur le trafic de la période courante comprennent en outre les paramètres suivants : le nombre d'utilisateurs de chaque porteuse transportée sur le circuit en bande de base, le trafic de chaque porteuse transportée sur le circuit en bande de base et le nombre de porteuses désactivées sur le circuit en bande de base, et
le module de configuration (702) comprend :
une unité de tri (7021) configurée pour effectuer un tri par taille, en fonction du nombre d'utilisateurs de chaque porteuse transportée sur le circuit en bande de base, ou bien du trafic de chaque porteuse transportée sur le circuit en bande de base, ou bien pour acquérir, en fonction du nombre d'utilisateurs de la porteuse et du nombre de porteuses désactivées sur le circuit en bande de base, un ou plusieurs résultats de calcul en utilisant un procédé de calcul prédéfini, ainsi que pour trier les résultats du calcul par taille, et
une unité de configuration (7022) constituée pour configurer la séquence de désactivation de tous les circuits en bande de base en fonction du tri par taille.
